# EUROPÄISCHE PATENTANMELDUNG

(11) **EP 1 281 469 A2**
(43) Veröffentlichungstag der Anmeldung: **05.02.2003**
(21) Anmeldenummer: 02014496.0
(22) Anmeldetag: 29.06.2002
(51) Int. Cl.: B23K 26/00

(54) **Verfahren und Vorrichtung zum Verschweissen von Metallbauteilen**

(30) Priorität: 04.07.2001 DE 10131883
(71) Anmelder: Hydro Aluminium Deutschland GmbH, 53117 Bonn (DE)
(72) Erfinder: Maier, Christof, Dr., 50735 Köln (DE); Steimmel, Franz, 53619 Rheinbreitbach (DE); Wehner, Torsten, 53332 Bornheim (DE)
(74) Vertreter: Cohausz & Florack

(57) **Zusammenfassung**

Die Erfindung betrifft ein Verfahren bzw. eine Vorrichtung zum Verschweißen von Metallbauteilen (10, 11) mit mindestens einem die Metallbauteile (10, 11) im Schweißnahtbereich aufschmelzenden Schweißstrahlgenerator. Ein derartiges Verfahren bzw. eine derartige Vorrichtung wird erfindungsgemäß im Hinblick auf reduzierte Kosten und verbesserte Schweißnahtqualität dadurch ausgestaltet, dass zur Schweißnahtherstellung mindestens ein die Metallbauteile (10, 11) von beiden Seiten im Schweißnahtbereich im Wärmeleitungsmode über im wesentlichen den gesamten Schweißnahtquerschnitt aufschmelzender Schweißstrahlgenerator vorgesehen ist.

## Beschreibung

Die Erfindung betrifft ein Verfahren bzw. eine Vorrichtung zum Verschweißen von Metallbauteilen bei welchem die Metallbauteile im Schweißnahtbereich mit Hilfe mindestens eines Schweißstrahls aufgeschmolzen werden.

Das Strahlschweißen gewinnt in zunehmendem Maße höhere Bedeutung bei der Verbindung von Metallbauteilen über eine Schweißnaht.

Unter Strahlschweißverfahren versteht man im wesentlichen das Laserstrahlschweißen und das Elektronenstrahlschweißen, wobei dem Laserstrahlschweißen eine wirtschaftlich größere Bedeutung zukommt. Im weiteren wird in der Regel vom Laserstrahlschweißen die Rede sein, was jedoch nicht als Einschränkung der erfindungsgemäßen Lehre zu verstehen ist.

Beim Laserstrahlschweißen ebenso wie beim Elektrodenstrahlschweißen ermöglichen Strahlintensitäten oberhalb von etwa 2 · 10⁶ W/cm² das Arbeiten im sogenannten Tiefschweißmode, in dem sich die Prozesswärme gleichförmig über die gesamte Fügetiefe verteilt. Hierdurch lassen sich beim Laserstrahlschweißen hohe Prozessgeschwindigkeiten für die Herstellung von Schweißnähten herstellen, was für den wirtschaftlichen Einsatz von Hochleistungslasern ausschlaggebend ist.

Es ist weiter bekannt, zum Beispiel das Laserstrahlschweißen mit dem Lichtbogenschweißen zu kombinieren, vgl. Christof Maier "Laserstrahl-Lichtbogen-Hybridschweißen von Aluminiumwerkstoffen", Shaker Verlag, Aachen 1999. Man spricht dann von sogenannten Hybridschweißverfahren.

Weiter ist es bekannt, mit zwei neben- oder hintereinander angeordneten Laserstrahlen im Tiefschweißmode von einer Seite (Doppelstrahlschweißen) oder von beiden Seiten (Simultanschweißen) zu arbeiten. Hierdurch wird die Prozessstabilität verbessert und eine Porenreduktion gewährleistet.

Die beim Strahlschweißen erzielbaren hohen Prozessgeschwindigkeiten führen dazu, dass sich die Strahlschweißverfahren insbesondere zur Herstellung von großen Schweißnahtlängen eignen. Derartige große Schweißnahtlängen treten beispielsweise bei der Herstellung von sogenannten "Tailored Blanks" auf. Unter "Tailored Blanks" versteht man ebene Metallbauteile, beispielsweise Bleche, die aus verschiedenartigen, insbesondere verschieden dicken Teilen bestehen. Häufig werden diese "Tailored Blanks" dadurch hergestellt, dass die verschiedenen Teile im Stumpfstoß bzw. I-Stoß als Stumpfnaht verschweißt werden. Zur Herstellung dieser Schweißverbindung eignen sich aus den bereits genannten Gründen die Strahlschweißverfahren.

Ein weiterer Anwendungsbereich für die Strahlschweißverfahren sind die im Automobilbau zunehmend erforderlichen langen Schweißnähte zur Verbindung von stranggepressten Hohlprofilen aus Aluminiumwerkstoffen mit anderen Karosserieteilen.

Beim Laserstrahlschweißen unterscheidet man prinzipiell drei physikalische Phänomene beim Auftreffen des Laserstrahls auf den metallischen Werkstoff. Abhängig von der Strahlintensität unterscheidet man bei der Wechselwirkung zwischen Laserstrahl und Metallwerkstoff zwischen dem Wärmeleitungsmode bei niedrigeren Laserstrahlintensitäten, dem Tiefschweißmode bei mittleren Laserstrahlintensitäten und der Plasmaabschirmung bei hohen Laserstrahlintensitäten.

Beim Wärmeleitungsmode wird das Metall von der Oberfläche her aufgeschmolzen, im wesentlichen ohne dass der Laserstrahl in das Material eindringt.

Im Tiefschweißmode, der im Stand der Technik, wie oben beschrieben, zur Herstellung von Schweißnähten zwischen Metallbauteilen eingesetzt wird, nimmt die Verdampfung an der Metalloberfläche so weit zu, dass sich in dem Werkstück eine Dampfkapillare ausbildet. Durch die Dampfkapillare gelangt der Laserstrahl in das Werkstück und die Wärmeeinkopplung wird über die gesamte Fügezone verteilt. Man spricht hier auch von der sogenannten "Keyhole"-Bildung. Relativbewegungen des Laserstrahls zum Werkstück sorgen für ein Fortschreiten der Kapillare durch die Metallbauteile. Dabei schmilzt an der Schmelzfront kontinuierlich Material auf, das um die Kapillare herumgetrieben wird und an der Schmelzrückwand unter Bildung einer schmalen Naht erstarrt. Bei der Herstellung von Schweißnähten im Stumpfstoß ist es wichtig, den Schweißprozess so zu steuern, dass die Kapillare sich gerade bis zur Unterseite der Metallbauteile erstreckt, so dass ein Verschweißen über den gesamten Querschnitt gewährleistet ist.

Bei der Plasmaabschirmung ist die Laserstrahlintensität schließlich so hoch, dass der Laserstrahl in einem abschirmenden Plasma an der Metalloberfläche absorbiert wird und nur noch geringfügig in die Oberfläche des Werkstoffes eindringen kann. Das in der Praxis übliche Verschweißen von Metallbauteilen im Tiefschweißmode bringt verschiedene Probleme mit sich. Zum einen können die zum Schweißen im Tiefschweißmode erforderlichen Strahlintensitäten bislang nur über relativ aufwendige Lasersysteme, wie etwa Nd:YAG- oder CO₂-Laser, erzielt werden. Hierdurch steigt der aparative Aufwand und damit die Kosten für die Herstellung der Schweißverbindung. Zum anderen sind zur Herstellung einwandfreier Schweißnahtqualitäten für im Tiefschweißmode hergestellte Schweißnähte zusätzliche Maßnahmen notwendig. Sowohl an der Schweißnahtoberraupe als auch an der Schweißnahtwurzel treten beim Schweißen im Tiefschweißmode unerwünschte Effekte auf. Insbesondere beim Verschweißen von Metallbauteilen aus Aluminiumwerkstoffen treten an der Schweißnahtwurzel unerwünschte Materialspitzen oder Kerben auf. Diese im wesentlichen im Bereich der Oberflächen der Schweißnahtraupe vorhandenen Effekte sind zum einen häufig optisch unerwünscht, fördern zum anderen bei dynamischer Belastung die Rissbildung und führen bei den "Tailored Blanks" zu eingeschränkter Weiterverarbeitbarkeit. Zu den möglichen zusätzlichen Maßnahmen zur Verbesserung der Schweißnahtqualität von im Tiefschweißmode hergestellten Schweißverbindungen wird auf die ebenfalls auf die Anmelderin zurückgehende, nachveröffentlichte deutsche Patentanmeldung DE 100 37 109 A1 verwiesen.

Ausgehend von dem zuvor beschriebenen Stand der Technik liegt der vorliegenden Erfindung die Aufgabe zu Grunde, ein Verfahren bzw. eine Vorrichtung zum Verschweißen von Metallbauteilen zur Verfügung zu stellen, mit dem bei geringem apparativem Aufwand die Herstellung einer Schweißnaht mit guten mechanischen und optischen Eigenschaften gewährleistet wird.

Gemäß einer ersten Lehre der Erfindung ist die zuvor hergeleitete und aufgezeigte Aufgabe für ein Verfahren zum Verschweißen von Metallbauteilen dadurch gelöst, dass die Metallbauteile zur Schweißnahtherstellung im Schweißnahtbereich von beiden Seiten mit Hilfe mindestens jeweils eines Schweißstrahls im Wärmeleitungsmode über im wesentlichen den gesamten Schweißnahtquerschnitt aufgeschmolzen werden. Die für das Arbeiten im Wärmeleitungsmode erforderlichen Strahlintensitäten können von kostengünstigen, einfach zu handhabenden Diodenlasern zur Verfügung gestellt werden. Hierdurch wird der aparative Aufwand und damit die Kosten zur Schweißnahtherstellung reduziert. Gleichzeitig führt das Schweißen im Wärmeleitungsmode zu guten Ergebnissen für die Oberflächenqualität der Schweißnaht auf beiden Seiten der zu verschweißenden Metallbauteile.

Möglich ist auch das Verschweißen von Metallbauteilen mit Hilfe eines Schweißstrahls im Wärmeleitungsmode von einer Seite der Metallbauteile. Da jedoch der Laserstrahl im Wärmeleitungsmode nicht durch das Werkstück, d.h. die Metallbauteile, hindurchdringt, besteht hierbei die Gefahr von Bindefehlern in der Nahtwurzel. Insbesondere beim Schweißen von Aluminium wird die Bildung von Bindefehlern in der Nahtwurzel durch die hochschmelzende Oxidschicht begünstigt, mit der technische Aluminiumoberflächen überzogen sind. Das erfindungsgemäße Arbeiten im Wärmeleitungsmode von beiden Seiten der Metallbauteile, bei dem die Metallbauteile über im wesentlichen den gesamten Schweißnahtquerschnitt aufgeschmolzen werden, führt zu einer sehr starken Reduktion von Bindefehlern bei gleichzeitig homogenem Nahtquerschnitt. Wie bereits erwähnt, ergeben sich durch das Schweißen im Wärmeleitungsmode zusätzlich glattere Schweißnähte als bei den herkömmlichen Verfahren, die im Tiefschweißmode arbeiten.

Eine sogenannten Offline-Bearbeitung, bei der die Metallbauteile von jeder Seite nacheinander verschweißt werden, wird dadurch ermöglicht, dass die Schmelzbadbereiche und die Schweißwärmebereiche der auf gegenüberliegenden Seiten der Metallbauteile einwirkenden Schweißstrahlen nicht überlappend erzeugt werden. Auf diese Art und Weise kann beispielsweise die Schweißnahtherstellung von ein und dem selben Laser zuerst von der Oberseite der zu verschweißenden Metallbauteile und anschließend nach dem Wenden der zu verschweißenden Metallbauteile von der Unterseite bewerkstelligt werden. Dabei kann die Offline-Bearbeitung bei gleichen oder unterschiedlichen Transportgeschwindigkeiten für die Metallbauteile und damit unterschiedlichen Eindringtiefen der Schmelzbadbereiche erfolgen.

Eine alternative Ausgestaltung erfährt das erfindungsgemäße Verfahren dadurch, dass die Schweißwärmebereiche der auf gegenüberliegenden Seiten der Metallbauteile einwirkenden Schweißstrahlen mit Hilfe einer entsprechenden relativen Anordnung der Positionen der Schweißstrahlen in Schweißnahtrichtung zumindest teilweise überlappend erzeugt werden. Diese Ausgestaltung führt dazu, dass die Schweißwärme des vorlaufenden Schweißstrahls Zeit hat, um durch die Dicke des Blechs zur Wärmeleitzone auf der gegenüberliegenden Seite der Metallbauteile zu gelangen und durch den so gegebenen Vorwärmeeffekt den Schweißprozess des nachlaufenden Laserstrahls unterstützt. Darüber hinaus wird dadurch, dass kein durchgehendes Schmelzbad über den gesamten Querschnitt der Schweißnaht erzeugt wird, gewährleistet, dass das Schmelzbad nicht durchhängt.

Eine weitere alternative Ausgestaltung erfährt das erfindungsgemäße Verfahren dadurch, dass die Schmelzbadbereiche der auf gegenüberliegende Seiten der Metallbauteile einwirkenden Schweißstrahlen mit Hilfe einer entsprechenden relativen Anordnung der Positionen der Schweißstrahlen in Schweißnahtrichtung zumindest teilweise überlappend erzeugt werden. Durch diese Ausgestaltung, bei der ein gemeinsamer Schmelzbadbereich hergestellt wird, erfolgt eine optimale Ausnutzung der in die Metallbauteile eingetragenen Schweißwärme und eine maximale Homogenität der Schweißnaht über den Schweißnahtquerschnitt.

Die fehlende oder vorhandene Überlappung der Schmelzbadbereiche wird bei den zuvor beschriebenen alternativen Ausgestaltungen des erfindungsgemäßen Verfahrens bei gegebener Schweißgeschwindigkeit durch die relative Anordnung der Positionen der Schweißstrahlen in Schweißnahtrichtung beeinflusst. Der Einfluss der Schweißgeschwindigkeit auf die relative Anordnung der Positionen der Schweißstrahlen zur Herstellung der fehlenden oder vorhandenen Überlappungen ist offensichtlich.

Dadurch, dass die Strahlflecke der Schweißstrahlen gemäß einer weiteren Ausgestaltung in Schweißnahtrichtung eine größere Ausdehnung aufweisen, lässt sich der Wärmeeintrag in den Schweißnahtbereich der Metallbauteile weiter steuern. Zusätzlich oder alternativ ist es möglich, in Schweißnahtrichtung mehrere hintereinanderlaufende oder überlagerte Strahlflecken aufweisende Schweißstrahlen anzuordnen, um den Schweißwärmeeintrag in geeigneter Art und Weise zu steuern. Zur weiteren Steuerung des Schweißwärmeeintrags und der Überlappung der Schweißwärmebereiche und/oder der Schmelzbadbereiche dient die Wahl unterschiedlicher Leistungen der Schweißstrahlen auf den gegenüberliegenden Seiten der Metallbauteile. Auch unterschiedliche Strahlfleckabmessungen auf den beiden einander abgewandten Seiten der zu verschweißenden Metallbauteile ermöglichen eine weitere Steuerung des Schweißwärmeeintrags zur Optimierung des Schweißergebnisses.

Unterschiedliche Dicken der Metallbauteile können beim Verschweißen mit Hilfe einer Weiterbildung des erfindungsgemäßen Verfahrens dadurch berücksichtigt werden, dass mit Hilfe einer entsprechenden relativen Positionierung der Strahlflecken quer zur Schweißnahtrichtung ein unterschiedlicher Schweißwärmeeintrag in die zu verschweißenden Metallbauteile eingestellt wird. Hierdurch ist gezielt der Leistungsanteil anpassbar, der in das dickere Metallbauteil eingebracht wird.

Zur Herstellung des Wärmeleitungsmode wird die Strahlintensität der Schweißstrahlen auf 5 · 10³ bis 1,7 · 10⁶ W/cm², insbesondere 1 · 10⁴ bis 9 · 10⁵ W/cm² eingestellt. Für Metallbauteile mit geringer Wärmeleitfähigkeit werden die Strahlintensitäten der Schweißstrahlen eher in den unteren Bereich der angegebenen Intensitäten gelegt, während für Metallbauteile mit höherer Wärmeleitfähigkeit die Strahlintensitäten in den oberen Bereich gelegt werden, wobei der obere Bereich mit 1,5 · 10⁶ W/cm² knapp unterhalb der Grenze des Übergangs zum Tiefschweißmode liegt.

Gemäß einer zweiten Lehre der Erfindung ist die oben hergeleitete und aufgezeigte Aufgabe für eine Vorrichtung zum Verschweißen von Metallbauteilen mit mindestens einem die Metallbauteile im Schweißnahtbereich aufschmelzenden Schweißstrahlgenerator dadurch gelöst, dass zur Schweißnahtherstellung mindestens ein die Metallbauteile von beiden Seiten im Schweißnahtbereich im Wärmeleitungsmode über im wesentlichen den gesamten Schweißnahtquerschnitt aufschmelzender Schweißstrahlgenerator vorgesehen ist. Zu den mit der Vorrichtung gemäß der zweiten Lehre der Erfindung verwirklichten Vorteilen wird auf die Ausführungen bezüglich der Vorteile des Verfahrens gemäß der ersten Lehre der Erfindung verwiesen.

Besonders vorteilhaft im Hinblick auf reduzierte Kosten und vereinfachte Bedienung sind die Schweißstrahlgeneratoren der Vorrichtung gemäß der zweiten Lehre der Erfindung als Diodenlaser ausgebildet.

Dadurch, dass Justagemöglichkeiten zur Justierung des Strahlflecks der Schweißstrahlgeneratoren in Schweißnahtrichtung und quer zur Schweißnahtrichtung vorgesehen sind, lässt sich die Überlappung der Schweißwärmebereiche bzw. der Schmelzbadbereiche und der Eintrag der Schweißwärme in die Metallbauteile steuern.

Da Diodenlaser regelmäßig nicht-zirkularsymmetrische Intensitätsverteilungen aufweisen, führt eine Ausgestaltung der Vorrichtung gemäß der zweiten Lehre der Erfindung dadurch, dass Justagemöglichkeiten zur Drehung der Schweißstrahlgeneratoren um die Strahlachse vorgesehen sind, dazu, dass zum Beispiel die Schweißnahtbreite auf Änderungen der Spaltweite zwischen den Metallbauteilen anpassbar ist.

Die Schweißnahtqualität lässt sich schließlich gemäß einer weiteren Ausgestaltung der Vorrichtung gemäß der zweiten Lehre der Erfindung dadurch verbessern, dass eine Schutzgasquelle zur Bearbeitung des Schweißnahtbereiches vorgesehen ist.

Es existieren eine Vielzahl von Möglichkeiten das erfindungsgemäße Verfahren bzw. die erfindungsgemäße Vorrichtung zum Verschweißen von Metallbauteilen auszugestalten und weiterzubilden. Hierzu wird beispielsweise verwiesen einerseits auf die den Patentansprüchen 1 und 8 nachgeordneten Patentansprüche andererseits auf die Beschreibung von bevorzugten Ausführungsbeispielen in Verbindung mit der Zeichnung.

In der Zeichnung zeigt
- Fig. 1: schematisch einen Längsschnitt durch Schweißnaht in der Prozesszone
- Fig. 2: schematisch ein erstes Ausführungsbeispiel einer Vorrichtung gemäß der zweiten Lehre der Erfindung aus der Schweißrichtung und
- Fig. 3: schematisch ein zweites Ausführungsbeispiel einer Vorrichtung gemäß der zweiten Lehre der Erfindung aus der Schweißrichtung.

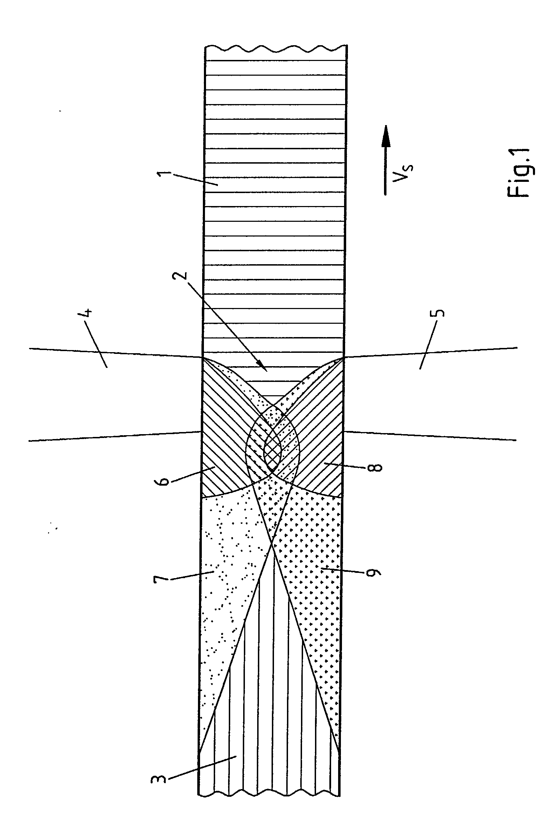

Der in Fig. 1 dargestellte Längsschnitt durch die Prozesszone zeigt den Stoßbereich zwischen zwei Metallbauteilen vor dem Verschweißen 1, die Prozesszone 2 und den Stoßbereich nach dem Verschweißen 3. In der Prozesszone 2 treffen die hier als Laserstrahlen 4 und 5 ausgebildeten Schweißstrahlen auf die Oberfläche der Metallbauteile auf und erzeugen im Wärmeleitungsmode einen oberen Schmelzbadbereich 6 mit angrenzendem oberen Schmelzwärmebereich 7 sowie einen unteren Schmelzbadbereich 8 mit angrenzendem unteren Schmelzwärmebereich 9.

Bei dem in Fig. 1 dargestellten Längsschnitt überlappen sich der obere Schmelzbadbereich 6 und der untere Schmelzbadbereich 8, so dass das Aufschmelzen der Metallbauteile im Schweißnahtbereich über den gesamten Schweißnahtquerschnitt gewährleistet ist.

Bei einer Verschiebung der relativen Positionen der Laserstrahlen 4 und 5 zueinander entfällt zunächst die Überlappung des oberen Schmelzbadbereiches 6 und des unteren Schmelzbadbereiches 8, wobei jedoch zunächst weiter eine Überlappung zwischen dem oberen Schmelzwärmebereich 7 und dem unteren Schmelzwärmebereich 9 bestehen bleibt.

Werden die Positionen der beiden Laserstrahlten 4, 5 weiter gegeneinander verschoben, so entfällt ab einem bestimmten Abstand auch die Überlappung zwischen dem oberen Schmelzwärmebereich 7 und dem unteren Schmelzwärmebereich 9.

Die relativen Abstände der Laserstrahlen 4, 5, die zu einer fehlenden bzw. vorhandenen Überlappung der Schmelzbadbereiche 6, 8 und/oder der Schmelzwärmebereiche 7, 9 führen, sind von verschiedenen Prozessparametern, wie der Strahlintensität, der Strahlgeometrie, der Schweißgeschwindigkeit, etc., abhängig.

Die spezifischen Vor- bzw. Nachteile fehlender oder vorhandener Überlappungen zwischen den Schmelzbadbereichen 6, 8 und den Schmelzwärmebereichen 7, 9 sind bereits in der Beschreibungseinleitung diskutiert worden. Es soll ergänzend darauf hingewiesen werden, dass die Definition der äußeren Grenze der Schmelzwärmebereiche 7, 9 nicht fest vorgegeben werden kann sondern zweckmäßigerweise in Abhängigkeit von den Anforderungen zu wählen ist.

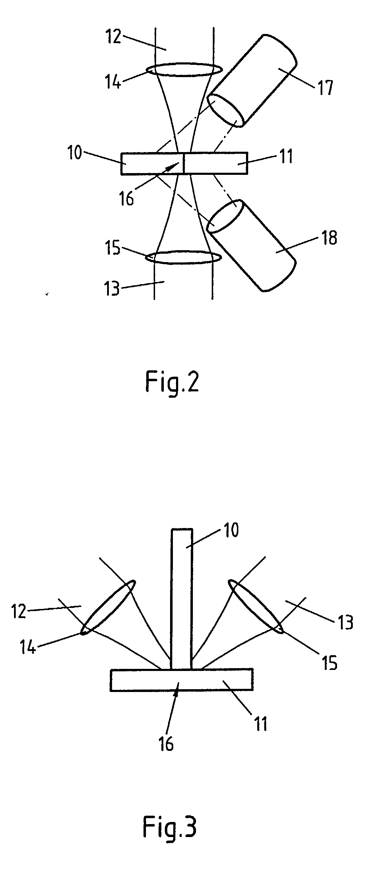

Bei dem in Fig. 2 dargestellten Ausführungsbeispiel einer erfindungsgemäßen Vorrichtung zum Verschweißen von Metallbauteilen 10, 11 erzeugen zwei nicht dargestellte, als Diodenlaser ausgebildete Schweißstrahlgeneratoren jeweils einen Laserstrahl 12, 13, die zur Schweißnahtherstellung die Metallbauteile 10, 11 im Schweißnahtbereich im Wärmeleitungsmode über den gesamten Schweißnahtquerschnitt aufschmelzen. Die Laserstrahlen 12, 13 werden mit Hilfe jeweils einer Optik 14, 15 auf den Schweißnahtbereich fokussiert. Die Metallbauteile 10, 11 werden bei dem in Fig. 2 dargestellten Ausführungsbeispiel einer erfindungsgemäßen Vorrichtung im Stumpfstoß verschweißt.

Zur Verbesserung der Schweißnahtqualität wird die Prozesszone 16 bei dem dargestellten ersten Ausführungsbeispiel über zwei Schutzgasdüsen 17, 18 mit einem üblichen Schutzgas belegt.

Eine Entkopplung der nicht dargestellten Diodenlaser kann durch Verkippen der Strahlachsen der Diodenlaser gegeneinander oder durch die Verwendung von Diodenlasern unterschiedlicher Wellenlängen und dem Einsatz von Bandpass- oder Kantenfiltern, wie etwa dichroitischen Spiegeln, gewährleistet werden. Hierzu wird wiederum auf die ebenfalls auf die Anmelderin zurückgehende, nachveröffentlichte Patentanmeldung DE 100 37 109 A1 verwiesen.

Das in Fig. 3 dargestellte, zweite Ausführungsbeispiel einer erfindungsgemäßen Vorrichtung zum Verschweißen von Metallbauteilen ist an das Verschweißen in T-Stößen angepasst.

Die Metallbauteile 10, 11 stehen bei diesem Ausführungsbeispiel im T-Stoß und die Laserstrahlen 12, 13 wirken von beiden Seiten auf den Schweißnahtbereich bzw. die Prozesszone 16 ein.

Grundsätzlich lässt sich eine erfindungsgemäße Vorrichtung an alle Stoßformen anpassen, bei denen die Schweißnaht von beiden Seiten für Schweißstrahlen zugänglich ist.

## Patentansprüche

1. Verfahren zum Verschweißen von Metallbauteilen bei welchem die Metallbauteile im Schweißnahtbereich mit Hilfe mindestens eines Schweißstrahls aufgeschmolzen werden,
**dadurch gekennzeichnet, daß**
die Metallbauteile zur Schweißnahtherstellung im Schweißnahtbereich von beiden Seiten mit Hilfe mindestens jeweils eines Schweißstrahls im Wärmeleitungsmode über im wesentlichen den gesamten Schweißnahtquerschnitt aufgeschmolzen werden.

2. Verfahren nach Anspruch 1,
**dadurch gekennzeichnet, daß**
die Schmelzbadbereiche und die Schweißwärmebereiche der auf gegenüberliegende Seiten der Metallbauteile einwirkenden Schweißstrahlen nicht überlappend erzeugt werden.

3. Verfahren nach Anspruch 1,
**dadurch gekennzeichnet, daß**
die Schweißwärmebereiche der auf gegenüberliegende Seiten der Metallbauteile einwirkenden Schweißstrahlen mit Hilfe einer entsprechenden relativen Anordnung der Positionen der Schweißstrahlen in Schweißnahtrichtung zumindest teilweise überlappend erzeugt werden.

4. Verfahren nach Anspruch 1,
**dadurch gekennzeichnet, daß**
die Schmelzbadbereiche der auf gegenüberliegende Seiten der Metallbauteile einwirkenden Schweißstrahlen mit Hilfe einer entsprechenden relativen Anordnung der Positionen der Schweißstrahlen in Schweißnahtrichtung zumindest teilweise überlappend erzeugt werden.

5. Verfahren nach einem der Ansprüche 1 bis 4,
**dadurch gekennzeichnet, daß**
die Strahlflecke der Schweißstrahlen in Schweißnahtrichtung eine größere Ausdehnung aufweisen.

6. Verfahren nach einem der Ansprüche 1 bis 5,
**dadurch gekennzeichnet, daß**
mit Hilfe einer entsprechenden relativen Positionierung der Strahlflecken quer zur Schweißnahtrichtung ein unterschiedlicher Schweißwärmeeintrag in die zu verschweißenden Metallbauteile eingestellt wird.

7. Verfahren nach einem der Ansprüche 1 bis 6,
**dadurch gekennzeichnet, daß**
die Strahlintensität der Schweißstrahlen auf 5 · 10³ bis 1,7 · 10⁶ W/cm², insbesondere 1 · 10⁴ bis 9 · 10⁵ W/cm², eingestellt wird.

8. Vorrichtung zum Verschweißen von Metallbauteilen (10, 11) mit mindestens einem die Metallbauteile (10, 11) im Schweißnahtbereich aufschmelzenden Schweißstrahlgenerator, insbesondere zur Verwirklichung eines Verfahrens nach einem der Ansprüche 1 bis 7,
**dadurch gekennzeichnet, daß**
zur Schweißnahtherstellung mindestens ein die Metallbauteile 10, 11 von beiden Seiten im Schweißnahtbereich im Wärmeleitungsmode über im wesentlichen den gesamten Schweißnahtquerschnitt aufschmelzender Schweißstrahlgenerator vorgesehen ist.

9. Vorrichtung nach Anspruch 8,
**dadurch gekennzeichnet, daß**
die Schweißstrahlgeneratoren als Diodenlaser ausgebildet sind.

10. Vorrichtung nach Anspruch 8,
**dadurch gekennzeichnet, daß**
Justagemöglichkeiten zur Justierung des Strahlflecks der Schweißstrahlgeneratoren in Schweißnahtrichtung und quer zur Schweißnahtrichtung vorgesehen sind.

11. Vorrichtung nach einem der Ansprüche 8 bis 10,
**dadurch gekennzeichnet, daß**
Justagemöglichkeiten zur Drehung der Schweißstrahlgeneratoren um die Strahlachse vorgesehen sind.

12. Vorrichtung nach einem der Ansprüche 8 bis 11,
**dadurch gekennzeichnet, daß**
mindestens eine Schutzgasquelle (17, 18) zur Bearbeitung des Schweißnahtbereiches vorgesehen ist.
